# EUROPEAN PATENT APPLICATION

(11) **EP 1 884 941 A1**
(43) Date of publication of application: **06.02.2008**
(21) Application number: 07014690.7
(22) Date of filing: 26.07.2007
(51) Int. Cl.: G11B 7/085, G11B 7/135

(54) **Information reproducing/recording device**

(30) Priority: 31.07.2006 JP 2006208393
(71) Applicant: Funai Electric Co., Ltd., Daito-shi, Osaka 574-0031 (JP)
(72) Inventor: Nakao, Seiji, Daito-shi Osaka 574-0013 (JP); Shimizu, Shinya, Daito-shi Osaka 574-0013 (JP); Shihara, Testuya, Daito-shi Osaka 574-0013 (JP)
(74) Representative: Grünecker, Kinkeldey, Stockmair & Schwanhäusser Anwaltssozietät

(57) **Abstract**

The present invention aims to provide an information reproducing/recording device capable of enhancing the reliability of a focus jump.

In the information reproducing/recording device in which the laser light emitted from a laser light source of an optical pickup is collected by an objective lens, irradiated on a multi-layered optical recording medium, and reflected by the multi-layered optical recording medium so as to be received by a light detector to be converted to an electrical signal, so that a focusing error signal and a tracking error signal are detected by the electrical signal in a signal processing circuit and focusing servo and tracking servo are executed based on the respective signal to reproduce or record information, the power of the laser light emitted from the laser light source is raised (S3) with the focusing and tracking servo turned OFF when reproduction of information and the like with respect to one of the recording layers of the multi-layered optical recording medium is finished to execute focus jump while optimally maintaining the amplitude of the focusing error signal.

## Description

### BACKGROUND OF THE INVENTION

The present invention relates to an information reproducing/recording device for performing focus jump in which a focus position of a laser light irradiated onto a multi-layered optical recording medium including a plurality of recording layers moves from one of the recording layers to another one of the recording layers.

An optical recording medium such as DVD (Digital Versatile Disc) includes that in which a plurality of recording layers capable of reproducing and recording information is stacked from one surface side. In the information reproducing/recording device capable of reproducing and recording information with respect to such multi-layered optical recording medium, an optical pickup is driven when reproducing information and the like to irradiate a laser light to one of the recording layers from one surface side of the multi-layered optical recording medium, detect a focusing error signal, a tracking error signal, and the like from the laser light reflected by the relevant recording layer, and perform focusing servo and tracking servo based on the signals. When reproduction of information and the like on one of the recording layers of the multi-layered optical recording medium is finished, the optical pickup is driven based on the focusing error signal to perform the focus jump in which the focus position of the laser light moves from one of the recording layers to another one of the recording layers.

In the focus jump, aberration is generated in the laser light due to difference in thickness of the base material interposed from the surface of the multi-layer optical recording medium to each recording layer. An aberration correcting means such as a liquid crystal element is used to correct the aberration of the laser light. However, the time required to switch the aberration correcting state of the aberration correcting means from a state suited for one of the recording layers to a state suited for another one of the recording layers of the multi-layered optical recording medium is longer than the time required for the focus jump. Therefore, the aberration tends to remain without being appropriately corrected when the focus position of the laser light is moved to another one of the recording layers. Such aberration lowers the amplitude of the focusing error signal, thereby causing failure in focus draw-in, collision of an object lens of the optical pickup and the multi-layered optical recording medium, and the like.

In the conventional information reproducing/recording device, the focus jump is performed after turning OFF the tracking servo (opening tracking servo loop) and completing the switching of the aberration correcting state of the aberration correcting means (see e.g., Japanese Unexamined Patent Application Publication No. 2004-326936). Furthermore, the gain servo is appropriately maintained by executing the focus jump, and switching the aberration correcting state of the aberration correcting means and correcting the gain of an amplifier to amplify the focusing error signal (see e.g., Japanese Unexamined Patent Application Publication No. 2004-342221).

### SUMMARY OF THE INVENTION

In view of overcoming the above problems, it is an aim of the present invention to provide an information reproducing/recording device capable of enhancing reliability of a focus jump.

The present invention relates to an information reproducing/recording device for reproducing or recording information with respect to a multi-layered optical recording medium, the device including an optical pickup for collecting laser light emitted from a laser light source at an objective lens, irradiating the laser light on the multi-layered optical recording medium including a plurality of recording layers, and receiving the laser light reflected by the multi-layered optical recording medium at a light detecting means to convert the laser light to electrical signal; a signal processing means for processing the electrical signal and detecting a focusing error signal and a tracking error signal; a servo means for executing focusing servo based on the focusing error signal, and executing tracking servo based on the tracking error signal; and a control means for controlling each section and executing focus jump of moving a focus position of the laser light from one of the recording layers to another one of the recording layers of the multi-layered optical recording medium; wherein the control means raises the power of the laser light emitted from the laser light source to execute the focus jump while optimally maintaining the amplitude of the focusing error signal.

In this manner, the amplitude of the focusing error signal can be optimally maintained (extent of performing focusing servo with the focus position of the laser light moved from one of the recording layers and focused on another one of the recording layers) without being lowered even if aberration is generated in the laser light irradiated on the multi-layered optical recording medium in the focus jump. Thus, the focus jump can be executed stably and at high accuracy based on the focusing error signal, and occurrence of failure of focus draw-in, collision of the objective lens of the optical pickup and the multi-layered optical recording medium etc. are prevented, thereby enhancing the reliability of the focus jump.

According to the present invention, in the information reproducing/recording device described above, an aberration correcting means for correcting the aberration of the laser light irradiated on the multi-layered optical recording medium according to each recording layer is further arranged; wherein the control means changes a drive signal of the aberration correcting means from a drive signal corresponding to an aberration correcting value suited for one of the recording layers to a drive signal corresponding to an aberration correcting value suited for another one of the recording layers of the multi-layered optical recording medium, and then raises the power of the laser light to execute the focus jump while optimally maintaining the amplitude of the focusing error signal, and when detecting that the focus position of the laser light is focused on another one of the recording layers based on the focusing error signal, lowers the power of the laser light according to a response state of the aberration correcting means.

Therefore, the starting time of the focus jump becomes earlier and the time required from the termination of the focus jump to the termination of the switching of the aberration correcting value can be reduced compared to when the focus jump is started after the switching of the aberration correction state is completed as in the conventional art by executing the focus jump after the switching of the drive signal of the aberration correcting means, that is, switching of the aberration correcting value is started, whereby the entire processing time can be reduced. Since the aberration remains without being appropriately corrected immediately after the termination of the focus jump due to the delay in the response time (time required to switch the aberration correcting value of the aberration correcting means from the value suited for one of the recording layers of the multi-layered optical recording medium to the value suited for another one of the recording layers) of the aberration correcting means with respect to the focus jump time (time required to move the focus position of the laser light from one of the recording layers of the multi-layered optical recording medium to another one of the recording layers), the amplitude of the focusing error signal lowers due to the aberration if the power of the laser light is lowered at once in a short period of time. On the other hand, the amplitude of the focusing error signal can be optimally maintained without being lowered by the aberration after the termination of the focus jump by lowering the power of the laser light according to the response state of the aberration correcting means, the focusing servo is executed stably and at high accuracy based on the focusing error signal, and the focus position of the laser light can be prevented from being shifted from another one of the recording layers.

Furthermore, the present invention relates to an information reproducing/recording device for reproducing or recording information with respect to a multi-layered optical recording medium, the device including an optical pickup for collecting laser light emitted from a laser light source at an objective lens, irradiating the laser light on the multi-layered optical recording medium including a plurality of recording layers, and receiving the laser light reflected by the multi-layered optical recording medium at a light detecting means to convert the laser light to electrical signal; a signal processing means for processing the electrical signal and detecting a focusing error signal and a tracking error signal; a servo means for executing focusing servo based on the focusing error signal, and executing tracking servo based on the tracking error signal; and a control means for controlling each section and executing focus jump of moving a focus position of the laser light from one of the recording layers to another one of the recording layers of the multi-layered optical recording medium; the device further including an amplifying means for amplifying the electrical signal converted in the light detecting means and outputting the amplified signal to the signal processing means; wherein the control means raises the amplification degree of the electrical signal of the amplifying means and the power of the laser light emitted from the laser light source to execute the focus jump while optimally maintaining the amplitude of the focusing error signal.

If the power of the laser light is raised in excess, the recorded information (pit etc.) of the recording layers of the multi-layered optical recording medium may degrade. On the other hand, according to the above configuration, even if aberration is generated in the laser light to be irradiated on the multi-layered optical recording medium in the focus jump, the recorded information of the recording layers can be protected while optimally maintaining the amplitude of the focusing error signal by raising the amplification degree of the electrical signal of the amplifying means and raising the power of the laser light to an extent that the recorded information of the recording layers are not degraded. Thus, occurrence of failure in focus draw-in, collision of the objective lens of the optical pickup and the multi-layered optical recording medium, and the like is prevented, thereby enhancing the reliability of the focus jump.

According to the present invention, in the information reproducing/recording device described above, an aberration correcting means for correcting the aberration of the laser light irradiated on the multi-layered optical recording medium according to each recording layer is further arranged; wherein the control means changes a drive signal of the aberration correcting means from a drive signal corresponding to an aberration correcting value suited for one of the recording layers to a drive signal corresponding to an aberration correcting value suited for another one of the recording layers of the multi-layered optical recording medium, and then raises the amplification degree of the electrical signal and the power of the laser light to execute the focus jump while optimally maintaining the amplitude of the focusing error signal, and when detecting that the focus position of the laser light is focused on another one of the recording layers based on the focusing error signal, lowers the amplification degree of the electrical signal and the power of the laser light according to a response state of the aberration correcting means.

Therefore, the starting time of the focus jump becomes earlier and the time required from the termination of the focus jump to the termination of the switching of the aberration correcting value can be reduced compared to when the focus jump is started after the switching of the aberration correction state is completed as in the conventional art by executing the focus jump after the switching of the aberration correcting value of the aberration correcting means is started, whereby the entire processing time can be reduced. The focus position of the laser light can be moved from one of the recording layers and focused on another one of the recording layers at high accuracy based on the focusing error signal having an optimally maintained amplitude by executing the focus jump after raising the amplification degree of the electrical signal of the amplifying means and the power of the laser light. Furthermore, the amplitude of the focusing error signal can be optimally maintained without being lowered by aberration after the termination of the focus jump by lowering the amplification degree of the electrical signal of the amplifying means and the power of the laser light according to the response state of the aberration correcting means, the focusing servo is executed stably and at high accuracy based on the focusing error signal, and the focus position of the laser light is prevented from being shifted from another one of the recording layers.

According to the present invention, in the information reproducing/recording device described above, the control means raises the power of the laser light after performing defocusing of slightly shifting the focus position of the laser light from one of the recording layers towards another one of the recording layers of the multi-layered optical recording medium.

The recorded information of one of the recording layers may degrade if the power of the laser light is raised with the focus position of the laser light focused on the one of the recording layers before the start of the focus jump. On the other hand, the degradation of the recorded information of the one of the recording layers is prevented and the recorded information can be protected by raising the power of the laser light after defocusing as described above.

According to the present invention, in the information reproducing/recording device described above, an aberration correcting means for correcting the aberration of the laser light irradiated on the multi-layered optical recording medium according to each recording layer is further arranged; wherein the control means temporarily changes a drive signal of the aberration correcting means from a drive signal corresponding to an aberration correcting value suited for one of the recording layers to an excessive drive signal exceeding a drive signal corresponding to an aberration correcting value suited for another one of the recording layers of the multi-layered optical recording medium, and then changes the drive signal to the drive signal corresponding to the aberration correcting value suited for another one of the recording layers to execute the focus jump while reducing a response time of the aberration correcting means.

In this manner, the aberration of the laser light is appropriately corrected by the aberration correcting means to optimally maintain the amplitude of the focusing error signal during execution of the focus jump, whereby the focus jump is executed stably and at high accuracy based on the focusing error signal, thereby enhancing the reliability of the focus jump.

The present invention relates to an information reproducing/recording device for reproducing or recording information with respect to a multi-layered optical recording medium, the device including an optical pickup for collecting laser light emitted from a laser light source at an objective lens, irradiating the laser light on the multi-layered optical recording medium including a plurality of recording layers, correcting aberration of the laser light by an aberration correcting means according to each recording layer of the multi-layered optical recording medium, and receiving the laser light reflected by the multi-layered optical recording medium at a light detecting means to convert the laser light to electrical signal; a signal processing means for processing the electrical signal and detecting a focusing error signal and a tracking error signal; a servo means for executing focusing servo based on the focusing error signal, and executing tracking servo based on the tracking error signal; and a control means for controlling each section and executing focus jump of moving a focus position of the laser light from one of the recording layers to another one of the recording layers of the multi-layered optical recording medium; wherein the control means temporarily changes a drive signal of the aberration correcting means from a drive signal corresponding to an aberration correcting value suited for one of the recording layers to an excessive drive signal exceeding a drive signal corresponding to an aberration correcting value suited for another one of the recording layers of the multi-layered optical recording medium, and then changes the drive signal to the drive signal corresponding to the aberration correcting value suited for another one of the recording layers to reduce a response time of the aberration correcting means, so that the focus jump is executed while optimally maintaining the amplitude of the focusing error signal.

In this manner, the aberration of the laser light is appropriately corrected by the aberration correcting means to optimally maintain the amplitude of the focusing error signal in the focus jump, whereby the focus jump is executed stably and at high accuracy based on the focusing error signal, thereby enhancing the reliability of the focus jump.

According to the present invention, in the information reproducing/recording device described above, an amplifying means for amplifying the electrical signal converted in the light detecting means and outputting the amplified signal to the signal processing means is further arranged; wherein the control means reduces the response time of the aberration correcting means and raises the amplification degree of the electrical signal of the amplifying means to execute the focus jump while optimally maintaining the amplitude of the focusing error signal.

In this manner, the amplitude of the focusing error signal can be optimally maintained by raising the amplification degree of the electrical signal of the amplifying means until the aberration correcting value of the aberration correcting means is switched from the value suited for one of the recording layers to the value suited for another one of the recording layers of the multi-layered optical recording medium, that is, while the aberration of the laser light is not appropriately corrected in focus jump, and the amplitude of the focusing error signal can be optimally maintained since the aberration of the laser light is appropriately corrected after the aberration correcting value is switched.

The present invention relates to an information reproducing/recording device for reproducing or recording information with respect to a multi-layered optical recording medium, the device including an optical pickup for collecting laser light emitted from a laser light source at an objective lens, irradiating the laser light on the multi-layered optical recording medium including a plurality of recording layers, and receiving the laser light reflected by the multi-layered optical recording medium at a light detecting means to convert the laser light to electrical signal; a signal processing means for processing the electrical signal and detecting a focusing error signal and a tracking error signal; a servo means for executing focusing servo based on the focusing error signal, and executing tracking servo based on the tracking error signal; and a control means for controlling each section and executing focus jump of moving a focus position of the laser light from one of the recording layers to another one of the recording layers of the multi-layered optical recording medium; the device further including an amplifying means for amplifying the electrical signal converted in the light detecting means and outputting the amplified signal to the signal processing means; wherein the control means raises the amplification degree of the electrical signal of the amplifying means to execute the focus jump while optimally maintaining the amplitude of the focusing error signal.

In this manner, the electrical signal converted in the light detecting means is appropriately amplified by the amplifying means in the focus jump, and the amplitude of the focusing error signal can be optimally maintained, whereby the focus jump is executed stably and at high accuracy based on the focusing error signal, thereby enhancing the reliability of the focus jump.

The present invention relates to an information reproducing/recording device for reproducing or recording information with respect to a multi-layered optical recording medium, the device including an optical pickup for collecting laser light emitted from a laser light source at an objective lens, irradiating the laser light on the multi-layered optical recording medium including a plurality of recording layers, correcting aberration of the laser light by an aberration correcting means according to each recording layer of the multi-layered optical recording medium, and receiving the laser light reflected by the multi-layered optical recording medium at a light detecting means to convert the laser light to electrical signal; a signal processing means for processing the electrical signal and detecting a focusing error signal and a tracking error signal; a servo means for executing focusing servo based on the focusing error signal, and executing tracking servo based on the tracking error signal; and a control means for controlling each section and executing focus jump of moving a focus position of the laser light from one of the recording layers to another one of the recording layers of the multi-layered optical recording medium; wherein the control means executes the focus jump after turning OFF the tracking servo and the focusing servo with respect to one of the recording layers of the multi-layered optical recording medium by the servo means, changes a drive signal of the aberration correcting means from a drive signal corresponding to an aberration correcting value suited for one of the recording layers to a drive signal corresponding to an aberration correcting value suited for another one of the recording layers of the multi-layered optical recording medium before the execution or simultaneously with the execution of the focus jump, optimally maintains the amplitude of the focusing error signal by raising the power of the laser light emitted from the laser light source during the execution of the focus jump, and when detecting that the focus position of the laser light is focused on another one of the recording layers based on the focusing error signal, turns ON the focusing servo to maintain the focused state, lowers the power of the laser light according to a response state of the aberration correcting means, and turns ON the tracking servo with respect to another one of the recording layers.

In this manner, the amplitude of the focusing error signal can be optimally maintained by raising the power of the laser light emitted from the laser light source even if aberration is generated in the laser light to be irradiated on the multi-layered optical recording medium in the focus jump. Thus, the focus jump can be executed stably and at high accuracy based on the focusing error signal, and occurrence of failure of focus draw-in, collision of the objective lens of the optical pickup and the multi-layered optical recording medium etc. is prevented, thereby enhancing the reliability of the focus jump. The starting time of the focus jump becomes earlier and the time required from the termination of the focus jump to the termination of the switching of the aberration correcting value can be reduced by starting the switching of the aberration correcting value of the aberration correcting means before the execution or simultaneously with the execution of the focus jump, whereby the entire processing time can be reduced. Moreover, the amplitude of the focusing error signal can be optimally maintained without being lowered by aberration by lowering the power of the laser light according to the response state of the aberration correcting means after the termination of the focus jump, whereby the focusing servo is executed stably and at high accuracy based on the focusing error signal, and the focus position of the laser light can be prevented from being shifted from another one of the recording layers. Furthermore, the tracking servo and the focusing servo can be prevented from greatly deviating and the optical pickup from greatly shifting and vibrating in the tracking direction (radial direction of multi-layered optical recording medium) and the focusing direction (direction perpendicular to the multi-layered optical recording medium) by turning OFF the tracking servo and the focusing servo during execution of the focus jump and switching of aberration correcting value of the aberration correcting means, whereby the collision of the objective lens of the optical pickup and the multi-layered optical recording medium can be reliably avoided.

The present invention relates to an information reproducing/recording device for reproducing or recording information with respect to a multi-layered optical recording medium, the device including an optical pickup for collecting laser light emitted from a laser light source at an objective lens, irradiating the laser light on the multi-layered optical recording medium including a plurality of recording layers, correcting aberration of the laser light by an aberration correcting means according to each recording layer of the multi-layered optical recording medium, and receiving the laser light reflected by the multi-layered optical recording medium at a light detecting means to convert the laser light to electrical signal; a signal processing means for processing the electrical signal and detecting a focusing error signal and a tracking error signal; a servo means for executing focusing servo based on the focusing error signal, and executing tracking servo based on the tracking error signal; and a control means for controlling each section and executing focus jump of moving a focus position of the laser light from one of the recording layers to another one of the recording layers of the multi-layered optical recording medium; wherein; the device further includes an amplifying means for amplifying the electrical signal converted in the light detecting means and outputting the amplified signal to the signal processing means; wherein the control means changes a drive signal of the aberration correcting means from a drive signal corresponding to an aberration correcting value suited for one of the recording layers to a drive signal corresponding to an aberration correcting value suited for another one of the recording layers of the multi-layered optical recording medium after turning OFF the tracking servo with respect to the one of the recording layers of the multi-layered optical recording medium by the servo means, turns OFF the focusing servo, and performs defocusing to slightly shift a focus position of the laser light from the one of the recording layers towards another one of the recording layers of the multi-layered optical recording medium, then raises an amplification degree of the electrical signal by the amplifying means and the power of the laser light emitted from the laser light source to executes the focus jump while optimally maintaining the amplitude of the focusing error signal, and when detecting that the focus position of the laser light is focused on another one of the recording layers based on the focusing error signal, turns ON the focusing servo to maintain the focused state, lowers the amplification degree of the electrical signal and the power of the laser light according to a response state of the aberration correcting means, and turns ON the tracking servo with respect to another one of the recording layers.

In this manner, even if aberration is generated in the laser light to be irradiated on the multi-layered optical recording medium in the focus jump, the amplitude of the focusing error signal is optimally maintained and the recorded information of the recording layer can be protected by raising the amplification degree of the electrical signal of the amplifying means and raising the power of the laser light to an extent that the recorded information of the recording layer is not degraded. Thus, the focus jump can be executed stably and at high accuracy based on the focusing error signal, and occurrence of failure of focus draw-in, collision of the objective lens of the optical pickup and the multi-layered optical recording medium etc. is prevented, thereby enhancing the reliability of the focus jump. The starting time of the focus jump becomes earlier and the time required from the termination of the focus jump to the termination of the switching of the aberration correcting value can be reduced by executing the focus jump after starting the switching of the aberration correcting value of the aberration correcting means, whereby the entire processing time can be reduced. Moreover, the focus position of the laser light can be moved from one of the recording layers and focused on another one of the recording layers at high accuracy based on the focusing error signal having an optimally maintained amplitude by executing the focus jump after raising the amplification degree of the electrical signal of the amplifying means and the power of the laser light. The amplitude of the focusing error signal can be optimally maintained without being lowered by aberration after the termination of the focus jump by lowering the amplification degree of the electrical signal of the amplifying means and the power of the laser light according to the response state of the aberration correcting means, whereby the focusing servo is executed stably and at high accuracy based on the focusing error signal, and the focus position of the laser light can be prevented from being shifted from another one of the recording layers. The degradation of the recorded information of one of the recording layers of the multi-layered optical recording medium can be prevented and the recorded information can be protected by raising the power of the laser light after performing defocusing. Furthermore, the tracking servo and the focusing servo can be prevented from greatly deviating and the optical pickup from greatly shifting and vibrating in the tracking direction and the focusing direction by turning OFF the tracking servo and the focusing servo during execution of the focus jump and switching of aberration correcting value of the aberration correcting means, whereby the collision of the objective lens of the optical pickup and the multi-layered optical recording medium can be reliably avoided.

According to the present invention, the focus jump is executed stably and at high accuracy since the amplitude of the focusing error signal is optimally maintained in the focus jump thereby enhancing the reliability of the focus jump.

### BRIEF DESCRIPTION OF THE DRAWINGS

Fig. 1 is a configuration view showing an information reproducing/recording device according to an embodiment of the present invention;
Fig. 2 is a flowchart showing a focus jump process according to a first embodiment;
Fig. 3 is a view showing temporal change in control parameters and signals in the focus jump process;
Fig. 4 is a flowchart showing the focus jump process according to a second embodiment;
Fig. 5 is a view showing temporal change in control parameters and signals in the focus jump process;
Fig. 6 is a flowchart showing the focus jump process according to a third embodiment;
Fig. 7 is a view showing temporal change in control parameters and signals in the focus jump process;
Fig. 8 is a flowchart showing the focus jump process according to a fourth embodiment;
Fig. 9 is a flowchart showing the focus jump process according to a fifth embodiment;
Fig. 10 is a flowchart showing the focus jump process according to a sixth embodiment;
Fig. 11 is a flowchart showing the focus jump process according to a seventh embodiment;
Fig. 12 is a flowchart showing the focus jump process according to an eighth embodiment;
Fig. 13 is a configuration view showing an information reproducing/recording device according to another embodiment of the present invention;
Fig. 14 is a flowchart showing the focus jump process according to a ninth embodiment; and
Fig. 15 is a flowchart showing the focus jump process according to a tenth embodiment.

### DETAILED DESCRIPTION OF THE PREFERRED EMBODIMENTS

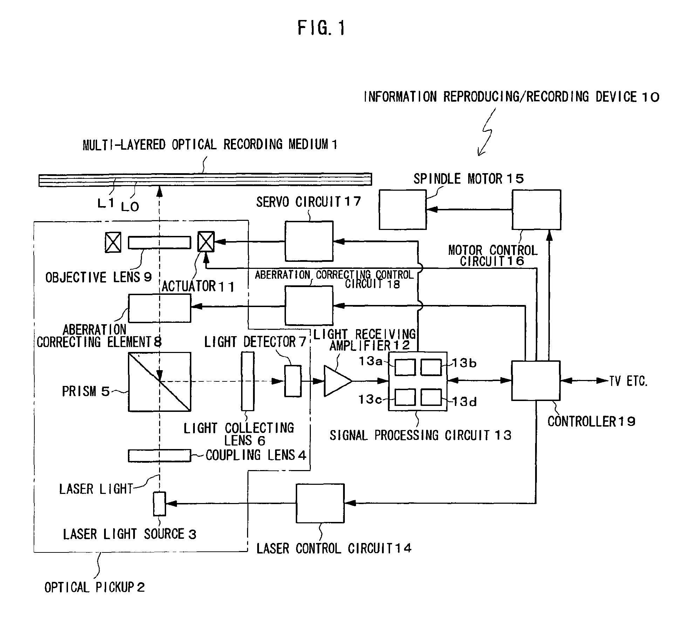

Fig. 1 is a configuration view of an information reproducing/recording device 10 according to an embodiment of the present invention. The information reproducing/recording device 10 reproduces or records information with respect to a multi-layered optical recording medium 1. The multi-layered optical recording medium 1 is an optical disc such as DVD (Digital Versatile Disc) formed by stacking a plurality of recording layers L0, L1 capable of reproducing and recording information from one surface side. An optical pickup 2 includes a laser light source 3, a coupling lens 4, a prism 5, a light collecting lens 6, a light detector 7, an aberration correcting element 8, an objective lens 9, and an actuator 11. The laser light source 3 is a semiconductor laser element etc. The aberration correcting element 8 is a liquid crystal element etc. The actuator 11 includes electromagnetic coil, magnet etc., and holds the objective lens 9 and the aberration correcting element 8. The laser light emitted from the laser light source 3 is converted to parallel beam of light by the coupling lens 4, and then passed through the prism 5 and entered into the aberration correcting element 8. The aberration of the laser light generated due to difference in thickness etc. of the base material interposed from the surface on the optical pickup 2 side of the multi-layered optical recording medium 1 to each recording layer L0, L1 is corrected by the aberration correcting element 8 according to each recording layer L0, L1, and thereafter, the light is collected at the objective lens 9 and irradiated on the multi-layered optical recording medium 1. The laser light reflected by the multi-layered optical recording medium 1 is passed through the objective lens 9 and the aberration correcting element 8, reflected by the prism 5, collected by the light collecting lens 6, and received by the light detector 7 to be converted to an electrical signal.

The electrical signal converted by the light detector 7 is amplified by the light receiving amplifier 12, and outputted to the signal processing circuit 13. The signal processing circuit 13 includes an FE detecting section 13a for detecting focusing error signal (hereinafter referred to as "FE signal"), a TE detecting section 13b for detecting tracking error signal (hereinafter referred to as "TE signal"), an AS detecting section 13c for detecting all added signal (hereinafter referred to as "AS signal") and an RF detecting section 13d for detecting reproduction signal (hereinafter referred to as "RF signal") for the information recorded on the multi-layered optical recording medium 1, in which each signal is detected from the electrical signal outputted from the light receiving amplifier 12. The FE signal is detected through a known detection method such as astigmatism method, knife edge method, and the like. The TE signal is detected through a known detection method such as push-pull method, three-beam method, and the like. The AS signal is detected by amplifying the electrical signal received and converted at each of a plurality of light receiving regions of the light detector 7 by means of the light receiving amplifier 12, and then performing adding calculation process for all the amplified electrical signals. That is, the AS signal is a signal indicating the total amount of light of the laser light reflected by the multi-layered optical recording medium 1 and received by the light detector 7.

The FE signal and the TE signal detected by the signal processing circuit 13 are outputted to a servo circuit 17. The servo circuit 17 drives the actuator 11 based on the FE signal or the TE signal to perform focusing servo or tracking servo when reproducing the information and the like. The focusing servo is an automatic control for focusing the focus position of the laser light irradiated on the multi-layered optical recording medium 1 on one of the recording layers L0, L1 of the multi-layered optical recording medium 1 by microscopically reciprocating the objective lens 9 in the focusing direction (direction perpendicular to the multi-layered optical recording medium 1) with the actuator 11. The tracking servo is an automatic control for following the track formed in one of the recording layers L0, L1 of the multi-layered optical recording medium 1 with the laser light by microscopically reciprocating the objective lens 9 in the tracking direction (radial direction of the multi-layered optical recording medium 1) with the actuator 11.

The FE signal, TE signal, AS signal, and RF signal detected in the signal processing circuit 13 are outputted to a controller 19. The controller 19 is a microcomputer. A laser control circuit 14 controls the drive of the laser light source 3. A spindle motor 15 rotates the multi-layered optical recording medium 1. A motor control circuit 16 controls the drive of the spindle motor 15. An aberration correcting control circuit 18 controls the drive of the aberration correcting element 8. The controller 19 controls each section of the information reproducing/recording device 10.

The controller 19 detects the focus position of the laser light with respect to the recording layers L0, L1 of the multi-layered optical recording medium 1 based on the FE signal. The controller 19 performs the focus jump of moving the focus position of the laser light from one of the recording layers to another one of the recording layers of the multi-layered optical recording medium 1 based on the FE signal. The controller 19 detects the irradiating position of the laser light with respect to the track of the recording layers L0, L1 of the multi-layered optical recording medium 1 based on the TE signal. The controller 19 also detects amount of light and aberration of the laser light based on the AS signal. Furthermore, the controller 19 outputs the RF signal to TV (television receiver) and the like. Image and audio information based on the RF signal are reproduced on TV and the like, and outputted. The signal on image and audio information to be recorded on the multi-layered optical recording medium 1 is inputted from the TV etc. to the controller 19. The inputted signal is processed in the signal processing circuit 13, and the information based on the signal is recorded on one of the recording layers L0, L1 of the multi-layered optical recording medium 1 by the optical pickup 2.

The light detector 7 forms one embodiment of the light detecting means in the present invention. The aberration correcting element 8 forms one embodiment of the aberration correcting means in the present invention. The light receiving amplifier 12 forms one embodiment of an amplifying means in the present invention. The signal processing circuit 13 forms one embodiment of a signal processing means in the present invention. The servo circuit 17 forms one embodiment of a servo means in the present invention. The controller 19 forms one embodiment of a control means in the present invention.

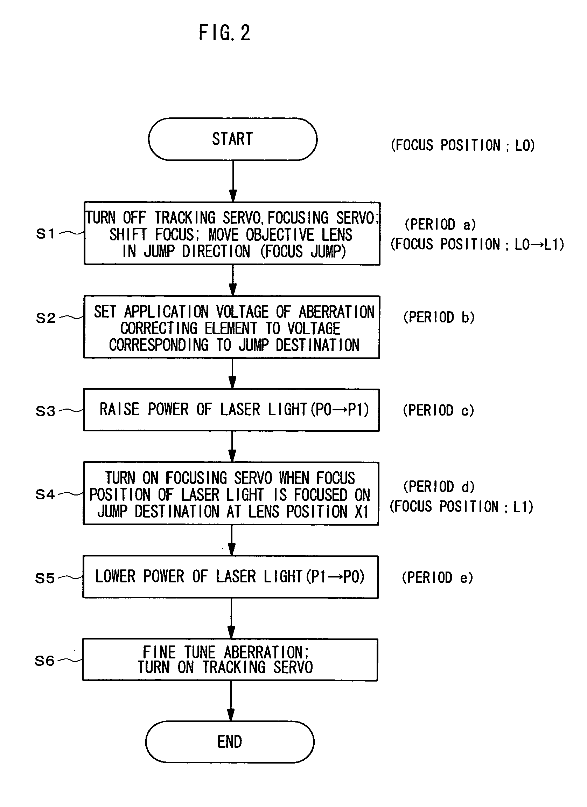

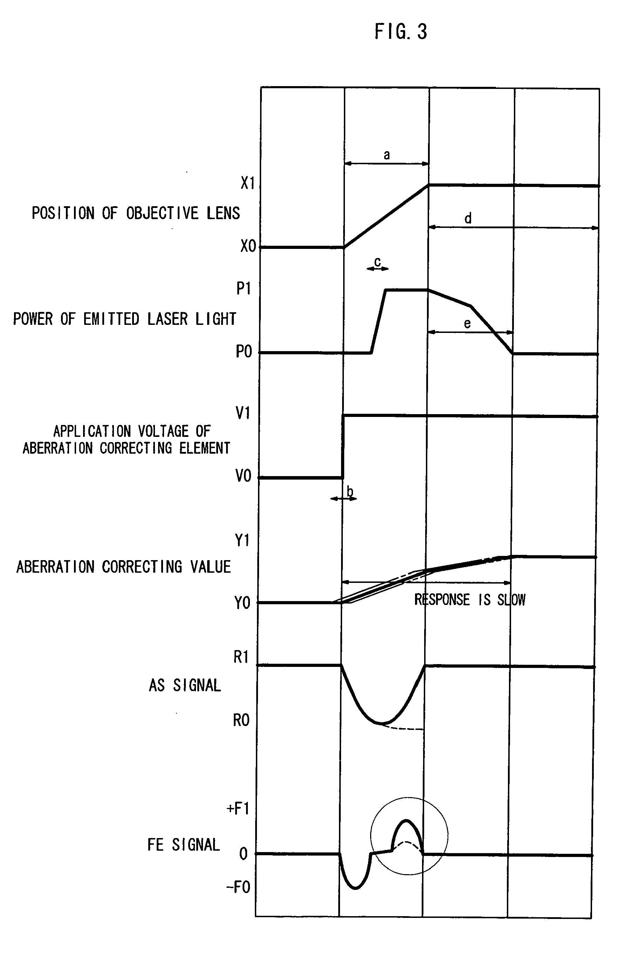

Fig. 2 is a flowchart showing procedures of the focus jump process according to a first embodiment of the present invention. Fig. 3 is a view showing temporal change in control parameters and signals in the focus jump process. Each step of Fig. 2 is executed by the controller 19 of the information reproducing/recording device 10. When reproduction of information and the like on one of the recording layers of the multi-layered optical recording medium 1 is finished, the controller 19 starts the focus jump process of moving the focus position of the laser light from one of the recording layers to another one of the recording layers. Here, a case of moving the focus position of the laser light from the recording layer L0, which is closer to the optical pickup 2, to the recording layer L1, which is distant from the optical pickup 2, of the multi-layered optical recording medium 1 will be described (same for other following embodiments).

The controller 19 first turns OFF the tracking servo and the focusing servo (open tracking servo loop) with respect to the recording layer L0 on which the focus is currently focused by the servo circuit 17, shifts the focus position of the laser light from the recording layer L0, moves the objective lens 9 in the jump direction (focusing direction from recording layer L0 to recording layer L1) by means of the actuator 11, and starts the focus jump (step S1 of Fig. 2, period a of Fig. 3). As shown in Fig. 3, the objective lens 9 then gradually moves from position X0 at where the focus position of the laser light is substantially focused on the recording layer L0, which is the origin of jump or jump origin, to the position X1 at where the focus position of the layer light is substantially focused on the recording layer L1, which is the destination of jump or jump destination. The positions X0, X1 of the objective lens 9 are set in advance and stored in the controller 19. The FE signal detected by the signal processing circuit 13 via the light detector 7 and the light receiving amplifier 12 shifts from value 0 indicating that the focus position of the laser light is focused on the recording layer L0 towards the side indicating that the focus position has moved away from the recording layer L0 towards the recording layer L1 side as shown in Fig. 3. In the present example, the polarity of the FE signal is set so that the FE signal shifts to the negative side. The AS signal gradually lowers from the high light amount value R1 since the reflectivity of the laser light lowers.

Furthermore, the controller 19 changes and sets the voltage (drive signal) to be applied to drive the aberration correcting element 8 by the aberration correcting control circuit 18 from an application voltage V0 corresponding to an aberration correcting value Y0 suited for the recording layer L0, which is the jump origin, to an application voltage V1 corresponding to an aberration correcting value Y1 suited for the recording layer L1, which is the jump destination, of the multi-layered optical recording medium 1 before the start, simultaneously with the start, or immediately after the start of the focus jump (step S2 of Fig. 2, period b of Fig. 3). The aberration correcting value (correcting state) of the aberration correcting element 8 then gradually changes from the aberration correcting value Y0 suited for the recording layer L0 to the aberration correcting value Y1 suited for the recording layer L1 as indicated by solid line, chain dashed line, and double chain dashed line in Fig. 3. The application voltages V0, V1 and the aberration correcting values Y0, Y1 of the aberration correcting element 8 are set in advance and stored in the controller 19.

The controller 19 then raises the power of the laser light emitted from the laser light source 3 from P0 to P1 by the laser control circuit 14 (step S3 of Fig. 2, period c of Fig. 3). As the focus position of the laser light approaches the recording layer L1, the FE signal shifts towards the positive side as shown in Fig. 3. In this case, if the power of the laser light is left at P0, the amplitude of the FE signal lowers as shown with a broken line in the circle of Fig. 3 due to the influence of aberration of the laser light that is not appropriately corrected by the aberration correcting element 8. Additionally, the AS signal shifts in the vicinity of the low light amount value R0 as shown with a broken line for example since the amount of light received by the light detector 7 decreases. On the other hand, when the power of the laser light is raised to P1 as described above, the amount of light received by the light detector 7 increases, and the amplitude of the FE signal is optimally maintained (extent of enabling focusing servo with the focus position of the laser light moved from one of the recording layers and focused on another one of the recording layers of the multi-layered optical recording medium 1) as shown with a solid line in the circle of Fig. 3 even if aberration is generated. The AS signal rises as shown with the solid line and becomes the high light amount value R1 of before the start of the focus jump. The powers P0, P1 of the laser light are set in advance so as to optimally maintain the amplitude of the FE signal and stored in the controller 19.

When the controller 19 detects that the focus position of the laser light is focused on the recording layer L1 as a result of the movement of the objective lens 9 to position X1, and the change in FE signal from the positive side to 0 value as shown in Fig. 3, the focus jump is terminated, and the focusing servo is turned ON (close focusing servo loop) by the servo circuit 17 to maintain the focused state (step S4 of Fig. 2, period d of Fig. 3). The controller 19 then gradually lowers the power of the laser light from P1 to P0 by means of the laser control circuit 14 according to the response state of the aberration correcting element 8 (step S5 of Fig. 2, period e of Fig. 3). Specifically, the change in response state of the aberration correcting element 8, that is, the change in the aberration correcting state by the aberration correcting element 8 is deemed as change in the AS signal, and the power of the laser light is gradually lowered to P0 so that the AS signal shifts at high light amount value R1. Immediately after the termination of the focus jump, the aberration remains without being appropriately corrected due to the delay in response time (time required to switch the aberration correcting value of the aberration correcting element 8 from the value suited for one of the recording layers to the value suited for another one of the recording layers of the multi-layered optical recording medium 1) of the aberration correcting element 8 with respect to the focus jump time (time required to move the focus position of the laser light from one of the recording layers to another one of the recording layers of the multi-layered optical recording medium 1). Thus, if the power of the laser light is lowered to P0 at once in a short period of time, the amplitude of the FE signal lowers by the aberration, and the AS signal lowers from the high light amount value R1. On the other hand, the amplitude of the FE signal is optimally maintained without being lowered by aberration after the termination of the focus jump, and the AS signal is maintained at high light amount value R1 by gradually lowering the power of the laser light to P0 according to the response state of the aberration correcting element 8 as described above.

The controller 19 thereafter lowers the power of the laser light to P0 as shown in Fig. 3, fine tunes the aberration correction of the laser light by means of the aberration correcting control circuit 14 and the aberration correcting element 8 when the aberration correcting value of the aberration correcting element 8 becomes Y1 (e.g., when AS signal stabilizes at substantially the same value as the value before the focus jump), turns ON the tracking servo with respect to the track of the recording layer L1 of the multi-layered optical recording medium 1 by means of the servo circuit 17 (step S6 of Fig. 2), and terminates the focus jump process.

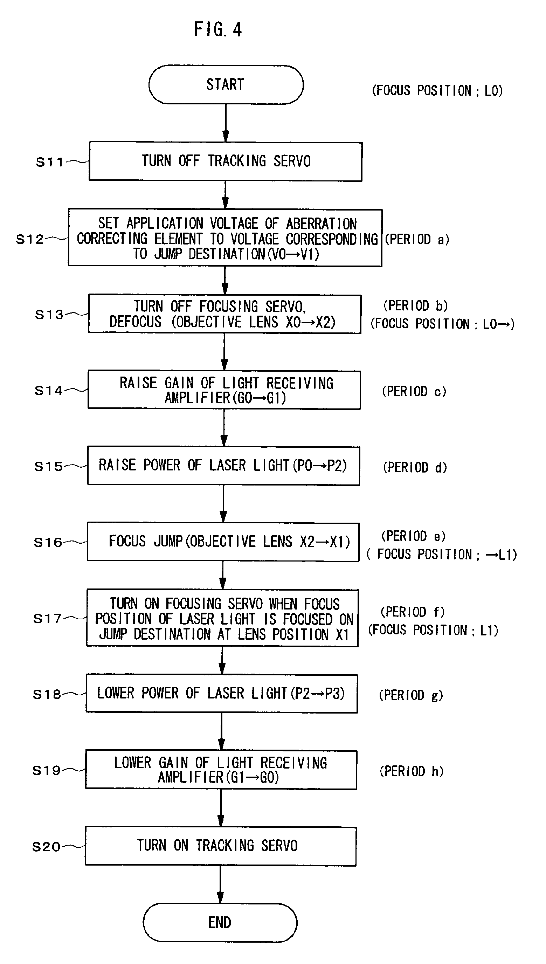

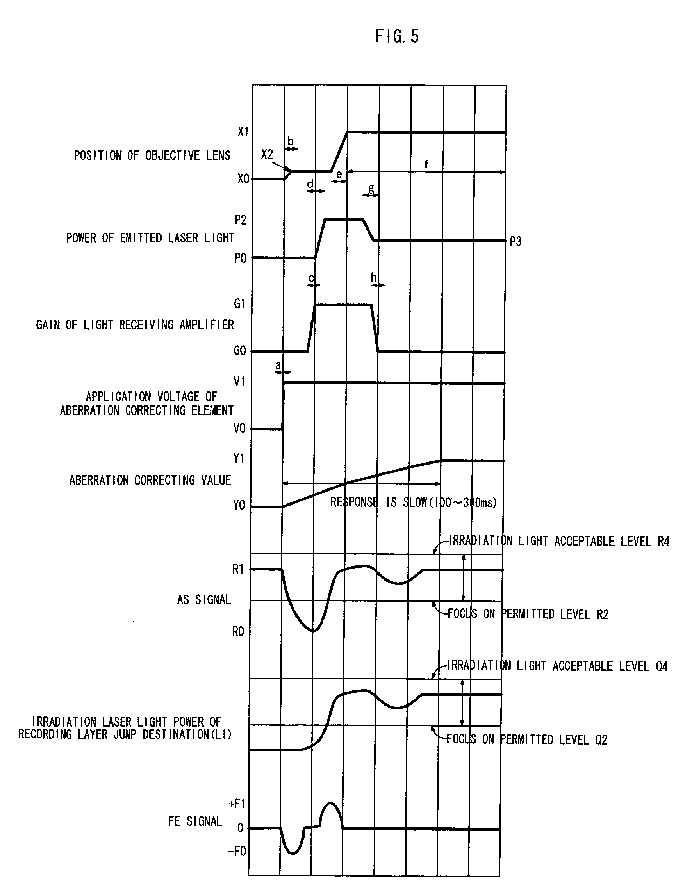

Fig. 4 is a flowchart showing the procedures of the focus jump process according to a second embodiment of the present invention. Fig. 5 is a view showing temporal change in control parameters and signals in the focus jump process. In the figure, the same reference numerals are used for the control parameters of the values the same as or corresponding to the first embodiment. When the focus jump process starts, the controller 19 first turns OFF the tracking servo with respect to the track of the recording layer L0 on which the focus is currently focused (step S11 of Fig. 4), and changes and sets the application voltage of the aberration correcting element 8 from the current V0 to V1 (step S12 of Fig. 4, period a of Fig. 5). Thus, the aberration correcting value of the aberration correcting element 8 gradually changes from the aberration correcting value Y0 to the aberration correcting value Y1 as shown with a solid line in Fig. 5. Furthermore, the controller 19 turns OFF the focusing servo with respect to the recording layer L0, and performs defocusing of moving the objective lens 9 from position X0 at where the focus position of the laser light is substantially focused on the recording layer L0 to position X2 at where the focus position is slightly shifted towards the recording layer L1 side (step S13 of Fig. 4, period b of Fig. 5). The position X2 of the objective lens 9 is set in advance and stored in the controller 19.

The controller 19 then raises the gain of the light receiving amplifier 12 (amplification degree of electrical signal outputted from the light detector 7) from the current G0 to G1 (step S14 of Fig. 4, period c of Fig. 5), and also raises the power of the laser light emitted from the laser light source 3 from P0 to P2 (step S15 of Fig. 4, period d of Fig. 5). The gains G0, G1 of the light receiving amplifier 12 and the power P2 of the laser light are set in advance so as to optimally maintain the amplitude of the FE signal, and stored in the controller 19. Since the amplitude of the FE signal is optimally maintained by raising the gain of the light receiving amplifier 12 and the power of the laser light, the power P2 of the laser light is set to a small value such that the laser light irradiated on the multi-layered optical recording medium 1 does not degrade the information (pit) recorded on the recording layers L0, L1 as shown in Fig. 5. For instance, the power P2 may be smaller than the power P1 shown in Fig. 3 etc. Thus, even if aberration is generated in the laser light, the amplitude of the FE signal is optimally maintained as shown in Fig. 5. The AS signal shifts between the focus ON permitted level R2 at which the focusing servo can be properly performed and the irradiation light acceptable level R4 at which the recorded information of the recording layers L0, L1 can be protected without being degraded as shown in Fig. 5. Moreover, the power of the irradiation laser at the recording layer L1 or the jump destination also shifts between the focus ON permitted level Q2 at which the focusing servo can be properly performed and the irradiation light acceptable level Q4 at which the recorded information of the recording layers L0, L1 can be protected without being degraded. In such state, the controller 19 moves the objective les 9 from position X2 towards position X1 and starts the focus jump (step S16 of Fig. 4, period e of Fig. 5).

When the controller 19 detects that the focus position of the laser light is focused on the recording layer L1 as a result of the movement of the objective lens 9 to position X1, and change in FE signal from the positive side to 0 value as shown in Fig. 5, the focus jump is terminated, and the focusing servo is turned ON to maintain the focused state (step S17 of Fig. 4, period f of Fig. 5). The controller 19 then gradually lowers the power of the laser light from P2 to P3, which is smaller than P2 and larger than P1, according to the response state of the aberration correcting element 8 (step S18 of Fig. 4, period g of Fig. 5), and gradually lowers the gain of the light receiving amplifier 12 from G1 to G0 (step S19 of Fig. 4, period h of Fig. 5). The AS signal and the irradiation laser power at the recording layer L1 then shift between the focus ON permitted level R2, Q2 and the irradiation light acceptable level R4, Q4 as shown in Fig. 5. In this case, the power of the laser light may be fine tuned between P0 and P2, and the gain of the light receiving amplifier 12 may be fine tuned between G0 and G1. Subsequently, the controller 19 fine tunes the aberration correcting by the aberration correcting element 8 when the aberration correcting value of the aberration correcting element 8 becomes Y1 as shown in Fig. 5 (e.g., AS signal stabilizes at the value between R2 and R4), turns ON the tracking servo with respect to the track of the recording layer L1 (step S20 of Fig. 4), and terminates the focus jump process.

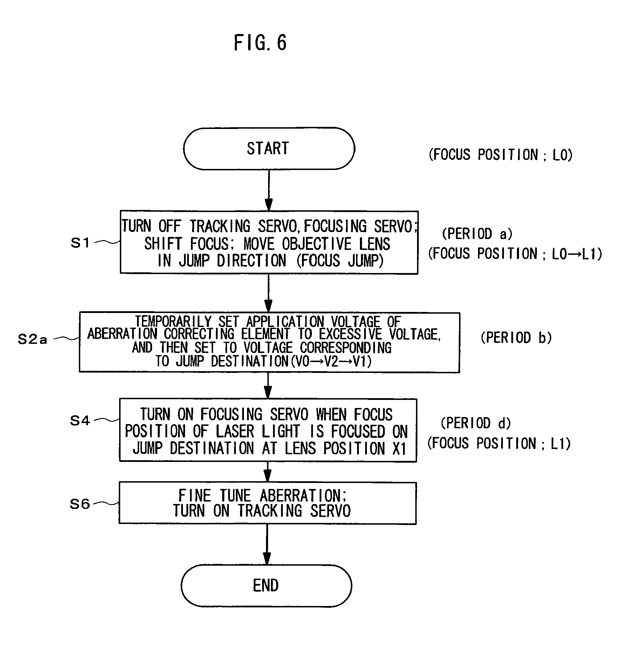

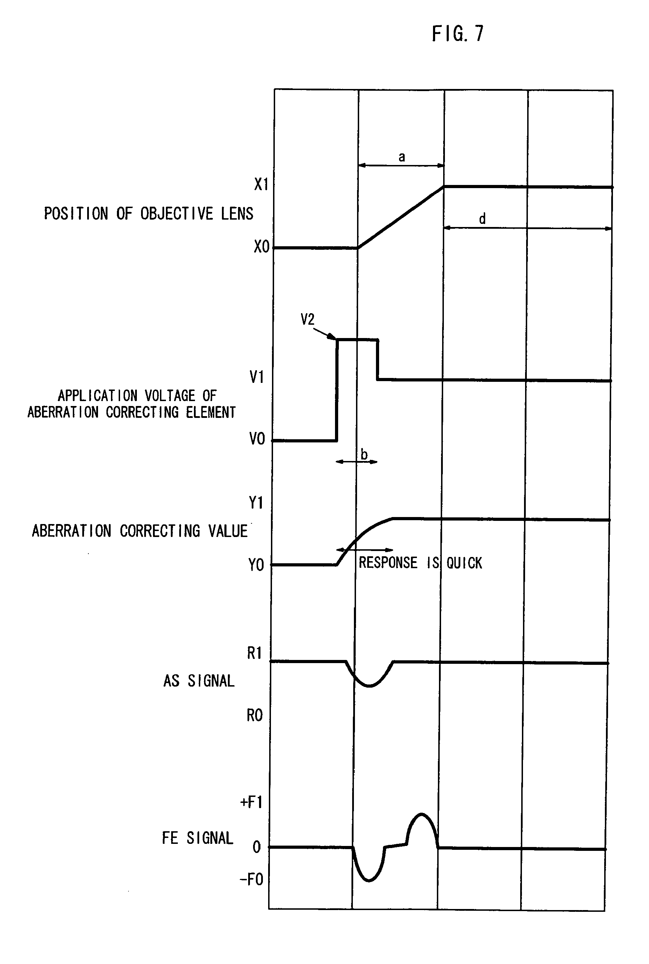

Fig. 6 is a flowchart showing the procedures of the focus jump process according to a third embodiment of the present invention. Fig. 7 is a view showing temporal change in control parameters and signals in the focus jump process. In Fig. 6, the same reference numbers are denoted for steps similar to Fig. 1. In each figure, the same reference numerals are used for the control parameters of the values the same as or corresponding to the first embodiment. When the focus jump process starts, the controller 19 first turns OFF the tracking servo and the focusing servo with respect to the track of the recording layer L0 on which the focus is currently focused, shifts the focus position of the laser light from the recording layer L0, moves the objective lens 9 in the jump direction, and starts the focus jump (step S1 of Fig. 6, period a of Fig. 7). The controller 19 then temporarily (predetermined time) changes and sets the application voltage of the aberration correcting element 8 from the application voltage V0 corresponding to the aberration correcting value Y0 suited for the recording layer L0, which is the jump origin, of the multi-layered optical recording medium 1 to an excessive application voltage (excessive drive signal) V2 exceeding the application voltage V1 corresponding to the aberration correcting value Y1 suited for the recording layer L1, which is the jump destination, before the start, simultaneously with the start, or immediately after the start of the focus jump, and then changes and sets the application voltage to the application voltage V1 (step S2a of Fig. 6, period b of Fig. 7). The excessive application voltage V2 of the aberration correcting element 8 and the setting timing thereof are set in advance so that the aberration correcting value of the aberration correcting element 8 switches from Y0 to Y1 during execution of the focus jump and stored in the controller 19. Therefore, the aberration correcting value of the aberration correcting element 8 rapidly rises from the aberration correcting value Y0 suited for the recording layer L0 as shown in Fig. 7, and reaches the aberration correcting value Y1 suited for the recording layer L1 during execution of the focus jump (before the objective lens 9 reaches position X1). That is, the response time of the aberration correcting element 8 is reduced, and the focus jump is executed while optimally maintaining the amplitude of the FE signal. Thereafter, when detecting that the focus position of the laser light is focused on the recording layer L1 as described above, the controller 19 turns ON the focusing servo to maintain the focused state (step S4 of Fig. 6, period d of Fig. 7). The controller 19 then fine tunes the aberration correction of the laser light by the aberration correcting element 8 as described above, turns ON the tracking servo with respect to the track of the recording layer L1 (step s6 of Fig. 6) and terminates the focus jump process.

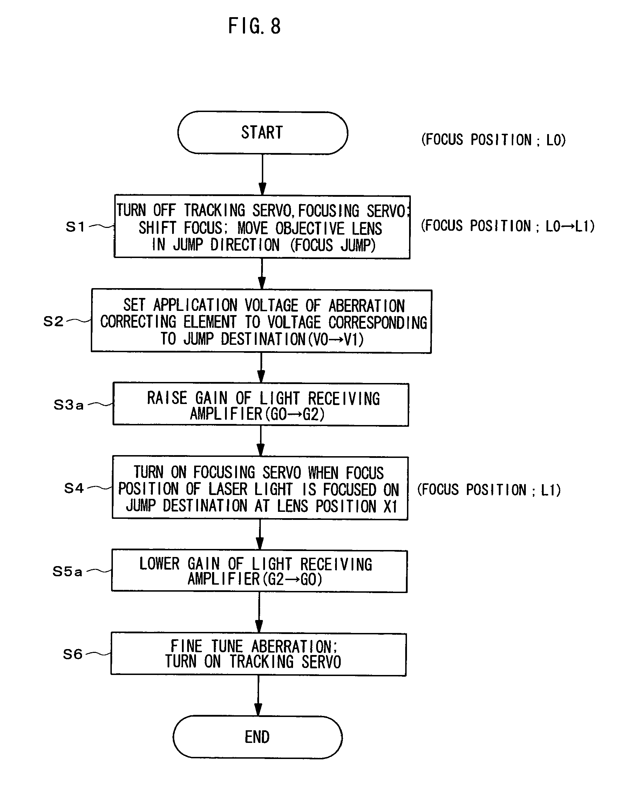

Fig. 8 is a flowchart showing procedures of the focus jump process according to a fourth embodiment of the present invention. In the figure, the same reference numerals are denoted for steps similar to Fig. 1. The same reference numerals are used for the control parameters of the values the same as or corresponding to the first and second embodiments. In the fourth embodiment, when the focus jump process starts, the controller 19 executes steps S1, S2 as described above and raises the gain of the light receiving amplifier 12 from G0 of before the start of the focus jump to G2 (step S3a). The gain G2 of the light receiving amplifier 12 is set in advance so as to optimally maintain the amplitude of the FE signal and stored in the controller 19. Since the amplitude of the FE signal is optimally maintained by simply raising the gain of the light receiving amplifier 12, the gain G2 is set to a value larger than the gain G1 described in Figs. 4 and 5. Thus, even if aberration is generated in the laser light, the focus jump is executed while optimally maintaining the amplitude of the FE signal. Thereafter, when detecting that the focus position of the laser light is focused on the recording layer L1 as described above, the controller 19 turns ON the focusing servo to maintain the focused state (step S4), and gradually lowers the gain of the light receiving amplifier 12 from G2 to G0 according to the response state of the aberration correcting element 8 (step S5a). The controller then fine tunes the aberration correction of the laser light by the aberration correcting element 8 as described above, turns ON the tracking servo with respect to the track of the recording layer L1 (step S6), and terminates the focus jump process.

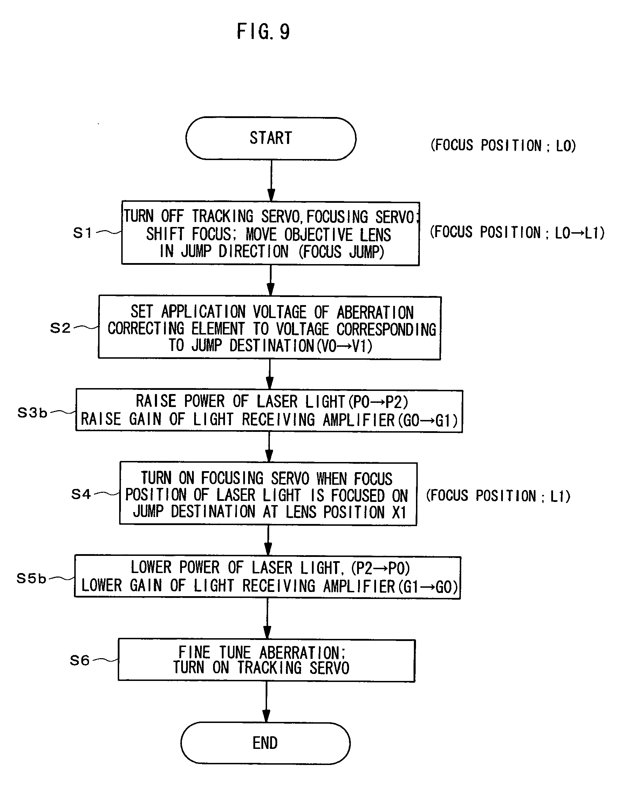

Fig. 9 is a flow chart showing procedures of the focus jump process according to a fifth embodiment of the present invention. In the figure, the same reference numerals are denoted for steps similar to Fig. 1. The same reference numerals are used for the control parameters of the values the same as or corresponding to the first and second embodiments. In the fifth embodiment, when the focus jump process starts, the controller 19 executes steps S1, S2 as described above and raises the power of the laser light emitted from the laser light source 3 from P0 to P2 and also raises the gain of the light receiving amplifier 12 from G0 before the start of the focus jump to G1 (step S3b). Thus, even if aberration is generated in the laser light, the focus jump is executed while optimally maintaining the amplitude of the FE signal. Thereafter, when detecting that the focus position of the laser light is focused on the recording layer L1 as described above, the controller 19 turns ON the focusing servo to maintain the focused state (step S4), and lowers the power of the laser light from P2 to P0 and lowers the gain of the light receiving amplifier 12 from G1 to G0 according to the response state of the aberration correcting element 8 (step S5b). The controller 19 then fine tunes the aberration correction of the laser light by the aberration correcting element 8 as described above, turns ON the tracking servo with respect to the track of the recording layer L1 (step S6), and terminates the focus jump process.

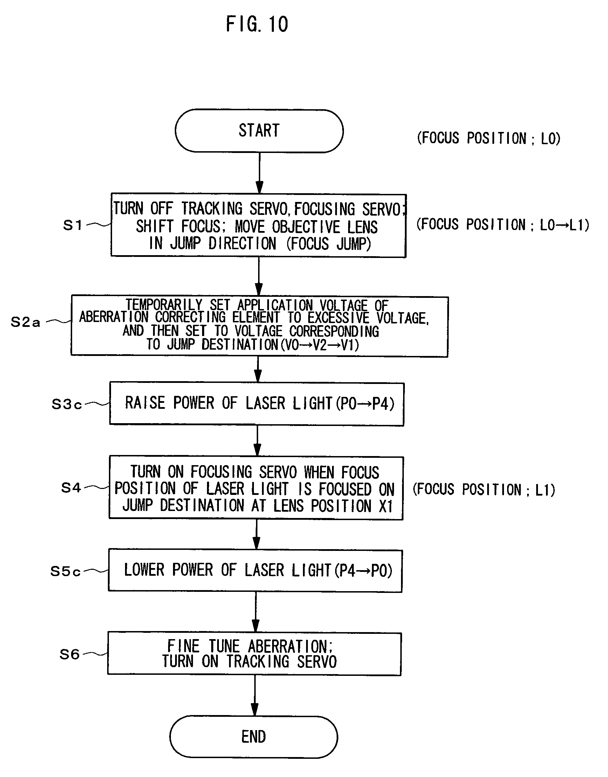

Fig. 10 is a flowchart showing the procedures of the focus jump process according to a sixth embodiment of the present invention. In the figure, the same reference numerals are denoted for steps similar to Figs. 1 and 3. Furthermore, the same reference numerals are used for the control parameters of the values the same as or corresponding to the first and the third embodiments. In the sixth embodiment, when the focus jump process starts, the controller 19 executes step S1 as described above, and temporarily (predetermined time) changes and sets the application voltage of the aberration correcting element 8 from the application voltage V0 suited for the recording layer L0, which is the jump origin, of the multi-layered optical recording medium 1 to the excessive application voltage V2 as described above, and then changes and sets the application voltage to the application voltage V1 suited for the recording layer L1, which is the jump destination(step S2a). The aberration correcting value of the aberration correcting element 8 thus changes from the aberration correcting value Y0 suited for the recording layer L0 to the aberration correcting value Y1 suited for the recording layer L1 during the execution of the focus jump, and the response time of the aberration correcting element 8 is reduced. The controller 19 then raises the power of the laser light emitted from the laser light source 3 from P0 to P4 (step S3c). The power P4 of the laser light is set in advance so as to optimally maintain the amplitude of the FE signal, and stored in the controller 19. Since the amplitude of the FE signal is optimally maintained by raising the application voltage of the aberration correcting element 8 and the power of the laser light, the power P4 of the laser light is set to a small value such that the laser light irradiated on the multi-layered optical recording medium 1 does not degrade the recorded information of the recording layers L0, L1. Therefore, even if aberration is generated in the laser light, the focus jump is executed while optimally maintaining the amplitude of the FE signal. Subsequently, when detecting that the focus position of the laser light is focused on the recording layer L1 as described above, the controller 19 turns ON the focusing servo to maintain the focused state (step S4), and lowers the power of the laser light from P4 to P0 according to the response state of the aberration correcting element 8 (step S5c). The controller 19 then fine tunes the aberration correction of the laser light by the aberration correcting element 8 as described above, turns ON the tracking servo with respect to the track of the recording layer L1 (step S6), and terminates the focus jump process.

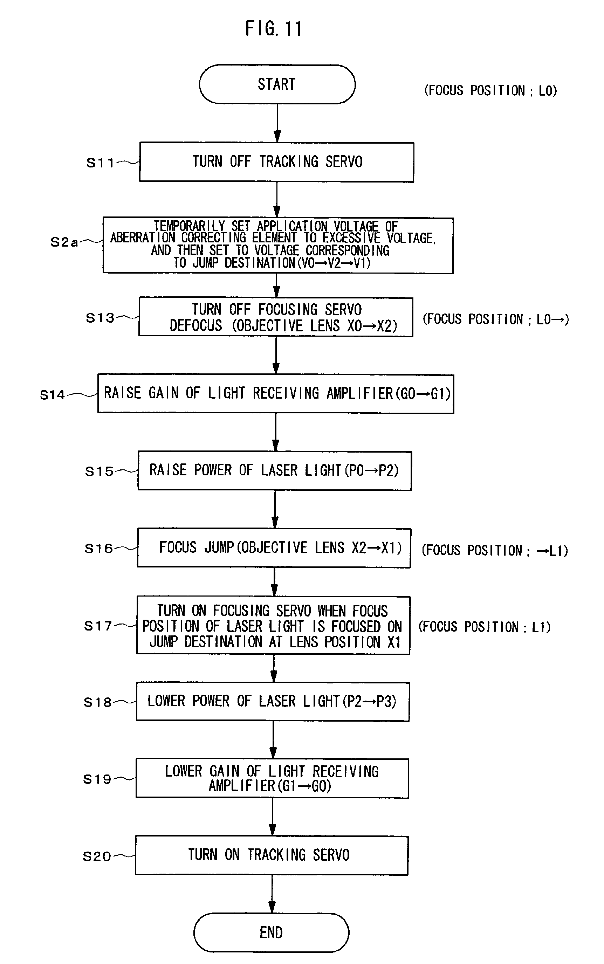

Fig. 11 is a flowchart showing the procedures of the focus jump process according to a seventh embodiment of the present invention. In the figure, the same reference numerals are denoted for steps similar to Figs. 4 and 6. Furthermore, the same reference numerals are used for the control parameters of the values the same as or corresponding to the first to third embodiments. In the seventh embodiment, when the focus jump process starts, the controller 19 executes step S11 as described above, and temporarily (predetermined time) changes and sets the application voltage of the aberration correcting element 8 from the application voltage V0 suited for the recording layer L0, which is the jump origin, of the multi-layered optical recording medium 1 to the excessive application voltage V2 and then changes and sets the application voltage to the application voltage V1 suited for the recording layer L1, which is the jump destination (step S2a). The aberration correcting value of the aberration correcting element 8 thus changes from the aberration correcting value Y0 suited for the recording layer L0 to the aberration correcting value Y1 suited for the recording layer L1 during the execution of the focus jump, and the response time of the aberration correcting element 8 is reduced. The controller 19 then turns OFF the focusing servo as described above, performs defocusing to move the objective lens 9 to position X2 (step S13), raises the gain of the light receiving amplifier 12 to G1 (step S14), raises the power of the laser light emitted from the laser light source 3 to P2 (step S15), moves the objective lens 9 towards position X1, and starts the focus jump (S16). In this case, even if aberration is generated in the laser light, the focus jump is executed while optimally maintaining the amplitude of the FE signal. Subsequently, when detecting that the focus position of the laser light is focused on the recording layer L1 as described above, the controller 19 turns ON the focusing servo to maintain the focused state (step S17), lowers the power of the laser light to P3 according to the response state of the aberration correcting element 8 (step S18), lowers the gain of the light receiving amplifier 12 to G0 (step S19), fine tunes the aberration correction by the aberration correcting element 8, turns ON the tracking servo with respect to the track of the recording layer L1 (step S20), and terminates the focus jump process.

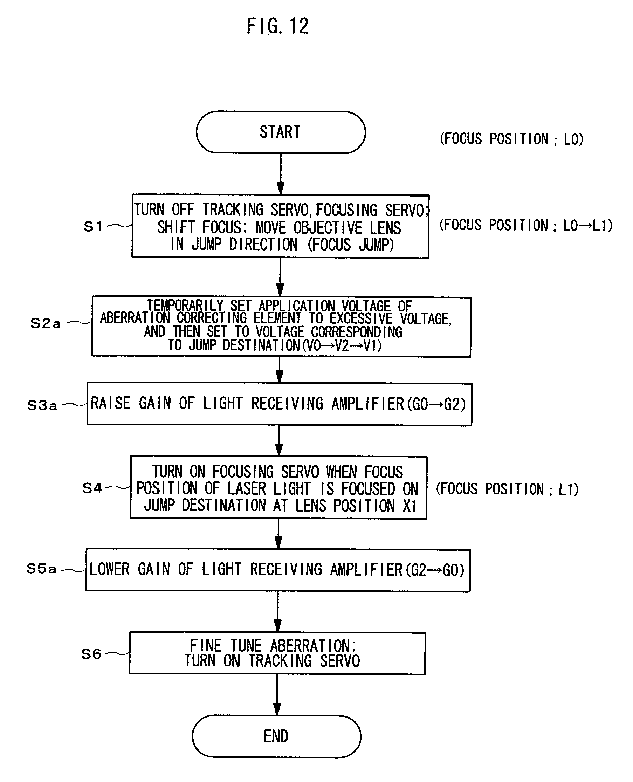

Fig. 12 is a flowchart showing the procedures of the focus jump process according to an eighth embodiment of the present invention. In the figure, the same reference numerals are denoted for steps similar to Figs. 1, 3, and 8. Furthermore, the same reference numerals are used for the control parameters of the values the same as or corresponding to the first, third and fourth embodiments. In the eighth embodiment, when the focus jump process starts, the controller 19 executes step S1 as described above, and temporarily changes and sets the application voltage of the aberration correcting element 8 from the application voltage V0 suited for the recording layer L0, which is the jump origin, of the multi-layered optical recording medium 1 to the excessive application voltage V2 and then changes and sets the application voltage to the application voltage V1 suited for the recording layer L1, which is the jump destination (step S2a). The controller 19 then raises the gain of the light receiving amplifier 12 from G0 of before the focus jump to G2 (step S3a). Thus, even if aberration is generated in the laser light, the focus jump is executed while optimally maintaining the amplitude of the FE signal. Subsequently, when detecting that the focus position of the laser light is focused on the recording layer L1 as described above, the controller 19 turns ON the focusing servo to maintain the focused state (step S4), and lowers the gain of the light receiving amplifier 12 from G2 to G0 according to the response state of the aberration correcting element 8 (step S5a). The controller 19 then fine tunes the aberration correction of the laser light by the aberration correcting element 8 as described above, turns ON the tracking servo with respect to the track of the recording layer L1 (step S6), and terminates the focus jump process.

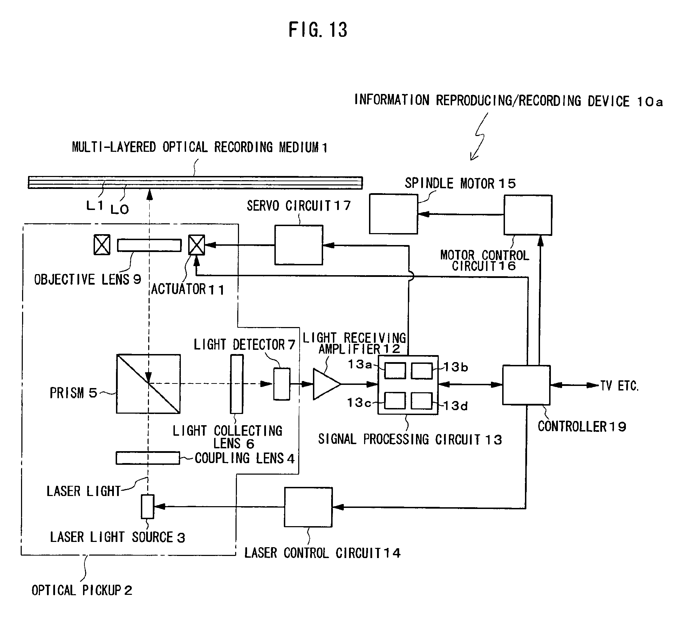

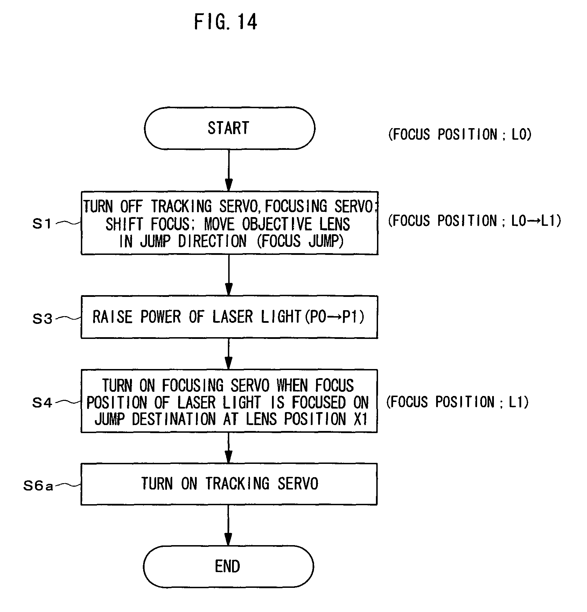

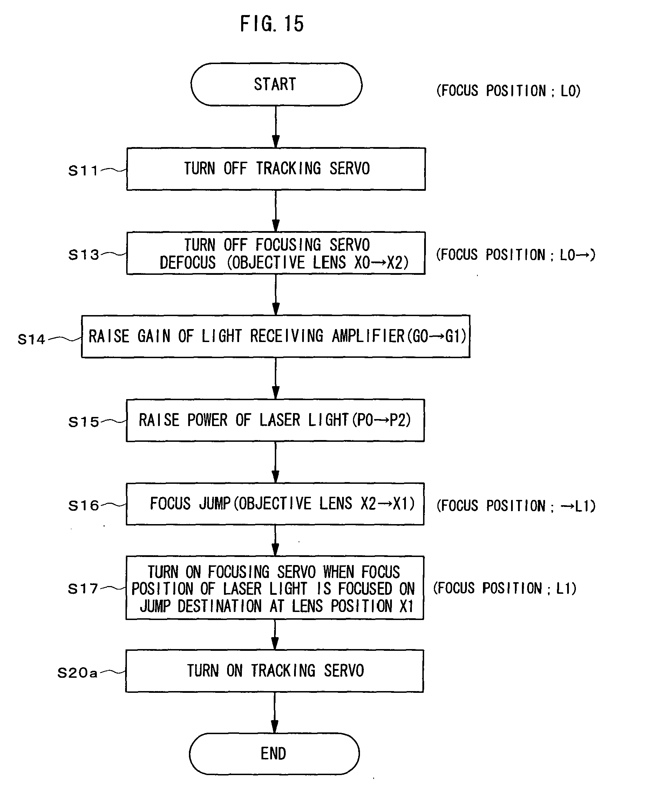

In the embodiments described above, an example where the present invention is applied to the information reproducing/recording device 10 equipped with the aberration correcting element 8 and the aberration correcting control circuit 18 to correct the aberration of the laser light has been described, but the present invention may be applied to an information reproducing/recording device 10a as shown in Fig. 13 that is not equipped with the aberration correcting element 8 and the aberration correcting control circuit 18. In Fig. 13, the same reference numerals are denoted for sections the same as or corresponding to Fig. 1. Figs. 14 and 15 are flow charts showing the procedures of the focus jump process according to ninth and tenth embodiments of the present invention executed in the information reproducing/recording device 10a. In each figure, the same reference numerals are denoted for steps similar to Fig. 1 or Fig. 2. Furthermore, the same reference numerals are used for the control parameters of the values the same as or corresponding to the first and second embodiments.

In the ninth embodiment shown in Fig. 14, when the focus jump process starts, the controller 19 turns OFF the tracking servo and the focusing servo with respect to the recording layer L0 of the multi-layered optical recording medium 1 as described above, shifts the focus position of the laser light from the recording layer L0, moves the objective lens 9 in the jump direction by the actuator 11, and starts the focus jump (step S1). Therefore, the objective lens 9 gradually moves from position X0 to position X1 as shown in Fig. 3, the FE signal shifts to negative side from value 0, and the AS signal gradually lowers from high light amount value R1. The controller 19 then raises the power of the laser light emitted from the laser light source 3 from P0 to P1 as described above (step S3). Since the amount of light received by the light detector 7 increases, the focus jump is executed while optimally maintaining the amplitude of the FE signal. Subsequently, when detecting that the focus position of the laser light is focused on the recording layer L1 as described above, the controller 19 turns ON the focusing servo by the servo circuit 17 to maintain the focused state (step S4). The controller 19 turns ON the tracking servo with respect to the track of the recording layer L1 with the power of the laser light maintained at P1 (step S6a) so as not to lower the amplitude of the FE signal since the aberration is generated in the laser light, and terminates the focus jump process.

In the tenth embodiment shown in Fig. 15, when the focus jump process starts, the controller 19 turns OFF the tracking servo with respect to the recording layer L0 of the multi-layered optical recording medium 1 as described above (step S11). The controller 19 then turns OFF the focusing servo as described above, performs defocusing to move the objective lens 9 to position X2 (step S13), raises the gain of the light receiving amplifier 12 to G1 (step S14), raises the power of the laser light emitted from the laser light source 3 to P2 (step S15), moves the objective lens 9 towards position X1, and starts the focus jump (step S16). The focus jump is then executed while optimally maintaining the amplitude of the FE signal. Subsequently, when detecting that the focus position of the laser light is focused on the recording layer L1 as described above, the controller 19 turns ON the focusing servo to maintain the focused state (step S14). The controller 19 then turns ON the tracking servo with respect to the track of the recording layer L1 with the power of the laser light maintained at P1 and the gain of the light receiving amplifier 12 maintained at G1 so as not to lower the amplitude of the FE signal since the aberration is generated in the laser light (step S20a), and terminates the focus jump process.

According to the above embodiments, even if aberration is generated in the laser light irradiated on the multi-layered optical recording medium 1 in the focus jump, the amplitude of the FE signal can be optimally maintained by performing at least one of raising the power of the laser light emitted from the laser light source 3, raising the gain of the light receiving amplifier 12, or reducing the response time by having the application voltage of the aberration correcting element 8 in excess. Thus, the focus jump can be executed stably and at high accuracy based on the FE signal, and the reliability of the focus jump can be enhanced by preventing failure of focus draw-in or occurrence of collision of the objective lens 9 of the optical pickup 2 and the multi-layered optical recording medium 1 etc.

Specifically, since the amount of light of the reflected laser light received by the light detector 7 increases by raising the power of the laser light, the amplitude of the FE signal can be optimally maintained even if aberration is generated in the laser light. Furthermore, since the electrical signal converted in the light detector 7 is appropriately amplified by raising the gain of the light receiving amplifier 12, the amplitude of the FE signal can be optimally maintained even if aberration is generated in the laser light. Moreover, the aberration of the laser light is appropriately corrected by the aberration correcting element 8 so that the amplitude of the FE signal can be optimally maintained during execution of the focus jump by having the application voltage of the aberration correcting element 8 in excess and reducing the response time. Furthermore, by both raising the gain of the light receiving amplifier 12 and reducing the response time of the aberration correcting element 8, the amplitude of the FE signal can be optimally maintained by raising the gain of the light receiving amplifier 12 until the aberration correcting value of the aberration correcting element 8 is switched from the value suited for one of the recording layers of the multi-layered optical recording medium 1 to the value suited for another one of the recording layers, that is, while the aberration of the laser light is not appropriately corrected in the focus jump, and after the aberration correcting value is switched, the amplitude of the FE signal can be optimally maintained since the aberration of the laser light is appropriately corrected.

If the power of the laser light is raised in excess, the recorded information of the recording layers L0, L1 of the multi-layered optical recording medium 1 may degrade. On the other hand, as described above, the recorded information of the recording layers L0, L1 can be protected while optimally maintaining the amplitude of the FE signal by performing, in the focus jump, at least one of raising the gain of the light receiving amplifier 12 and reducing the response time of the aberration correcting element 8, or in addition, raising the power of the laser light to an extent that the recorded information of the recording layers L0, L1 are not degraded.

The starting time of the focus jump becomes earlier and the time required from the termination of the focus jump to the termination of the switching of the aberration correcting value can be reduced compared to when starting the focus jump after the switching of the aberration correcting state is completed as in the conventional art by starting the switching of the application voltage and the aberration correcting value of the aberration correcting element 8 from the value suited for one of the recording layers to the value suited for another one of the recording layers of the multi-layered optical recording medium 1 before the execution or simultaneously with the execution of the focus jump, whereby the processing time of the entire focus jump process can be reduced. In particular; by switching the drive signal of the aberration correcting element 8 before the execution of the focus jump, the starting time of the focus jump further and more reliably becomes earlier, the time lag from the termination of the focus jump to the termination of the switching of the aberration correcting value is reduced, and the processing time of the entire focus jump process can be reduced.

The focus position of the laser light is moved from one of the recording layers to another one of the recording layers of the multi-layered optical recording medium 1 and focused at high accuracy based on the FE signal having an optimally maintained amplitude by executing the focus jump after the gain of the light receiving amplifier 12 and the power of the laser light start to be raised.

Since the aberration remains without being appropriately corrected due to delay in the response time of the aberration correcting element 8 with respect to the focus jump time immediately after the termination of the focus jump, the amplitude of the FE signal lowers due to the aberration if the power of the laser light is lowered at once in a short period of time. On the other hand, the amplitude of the FE signal can be optimally maintained without being lowered by the aberration after the termination of the focus jump by lowering the power of the laser light and the gain of the light receiving amplifier 12 according to the response state of the aberration correcting element 8 as described above. The focusing servo is thus executed stably and at high accuracy based on the FE signal, thereby preventing the focus position of the laser light from shifting from the recording layer serving as the jump destination.

If the power of the laser light is raised with the focus position of the laser light focused on the recording layer serving as the jump origin of the multi-layered optical recording medium 1 before the start of the focus jump, the recorded information of the recording layer, which is the jump origin, may be degraded. On the other hand, as described above, the degradation of the recorded information of the recording layer, which is the jump origin, is prevented and the recorded information can be protected by raising the power of the laser light after performing defocusing of slightly shifting the focus position of the laser light from the recording layer, which is jump origin, towards the recording layer side, which is the jump destination.

Furthermore, the tracking servo and the focusing servo are prevented from being greatly deviated, and the optical pickup 2 is prevented from greatly shifting and vibrating in the tracking direction (radial direction of the multi-layered optical recording medium 1) and the focusing direction (direction perpendicular to the multi-layered optical recording medium 1) by turning OFF the tracking servo and the focusing servo during execution of the focus jump or when switching the aberration correcting value of the aberration correcting element 8, thereby reliably avoiding the collision of the optical pickup 2 and the multi-layered optical recording medium 1.

The present invention may employ various forms other than the embodiments described above. For instance, a case where the focus jump is executed from the recording layer L0 closer to the optical pickup 2 of the multi-layered optical recording medium 1 to the recording layer L1 distant from the optical pickup 2 has been described in the above embodiments, but the present invention may also be applied to a case where the focus jump is executed from the recording layer distant from the optical pickup of the multi-layered optical recording medium to the recording layer closer to the optical pickup.

In the embodiments described above, a case where the present invention is applied to the information reproducing/recording device 10, 10a capable of reproducing and recording information with respect to the multi-layered optical recording medium 1 including two recording layers L0, L1 has been described, but the present invention is also applicable to the information reproducing/recording device capable of reproducing and recording information with respect to the multi-layered optical recording medium including three or more recording layers, or to reproduction-only device capable of only reproducing information with respect to the multi-layered optical recording medium.

## Claims

1. An information reproducing/recording device for reproducing or recording information with respect to a multi-layered optical recording medium, the device comprising:
an optical pickup for collecting laser light emitted from a laser light source at an objective lens, irradiating the laser light on the multi-layered optical recording medium including a plurality of recording layers, correcting aberration of the laser light by aberration correcting means according to each recording layer of the multi-layered optical recording medium, and receiving the laser light reflected by the multi-layered optical recording medium at light detecting means to convert the laser light to an electrical signal;
signal processing means for processing the electrical signal and detecting a focusing error signal and a tracking error signal;
servo means for executing focusing servo based on the focusing error signal, and executing tracking servo based on the tracking error signal; and
control means for controlling each section and executing focus jump of moving a focus position of the laser light from one of the recording layers to another one of the recording layers of the multi-layered optical recording medium; wherein
the control means,
executes the focus jump after turning OFF the tracking servo and the focusing servo with respect to one of the recording layers of the multi-layered optical recording medium by the servo means,
changes a drive signal of the aberration correcting means from a drive signal corresponding to an aberration correcting value suited for one of the recording layers to a drive signal corresponding to an aberration correcting value suited for another one of the recording layers of the multi-layered optical recording medium before the execution or simultaneously with the execution of the focus jump,
optimally maintains an amplitude of the focusing error signal by raising the power of the laser light emitted from the laser light source during the execution of the focus jump, and
when detecting that the focus position of the laser light is focused on another one of the recording layers based on the focusing error signal, turns ON the focusing servo to maintain the focused state, lowers the power of the laser light according to a response state of the aberration correcting means, and turns ON the tracking servo with respect to another one of the recording layers.

2. An information reproducing/recording device for reproducing or recording information with respect to a multi-layered optical recording medium, the device comprising:
an optical pickup for collecting laser light emitted from a laser light source at an objective lens, irradiating the laser light on the multi-layered optical recording medium including a plurality of recording layers, correcting aberration of the laser light by aberration correcting means according to each recording layer of the multi-layered optical recording medium, and receiving the laser light reflected by the multi-layered optical recording medium at light detecting means to convert the laser light to an electrical signal;
signal processing means for processing the electrical signal and detecting a focusing error signal and a tracking error signal;
servo means for executing focusing servo based on the focusing error signal, and executing tracking servo based on the tracking error signal; and
control means for controlling each section and executing focus jump of moving a focus position of the laser light from one of the recording layers to another one of the recording layers of the multi-layered optical recording medium; wherein the device further comprising:
amplifying means for amplifying the electrical signal converted in the light detecting means and outputting the amplified signal to the signal processing means; wherein
the control means,
changes a drive signal of the aberration correcting means from a drive signal corresponding to an aberration correcting value suited for one of the recording layers to a drive signal corresponding to an aberration correcting value suited for another one of the recording layers of the multi-layered optical recording medium after turning OFF the tracking servo with respect to the one of the recording layers of the multi-layered recording medium by the servo means, turns OFF the focusing servo, and performs defocusing to slightly shift a focus position of the laser light from the one of the recording layers towards another one of the recording layers of the multi-layered optical recording medium,
then raises an amplification degree of the electrical signal by the amplifying means and the power of the laser light emitted from the laser light source to executes the focus jump while optimally maintaining the amplitude of the focusing error signal, and
when detecting that the focus position of the laser light is focused on another one of the recording layers based on the focusing error signal, turns ON the focusing servo to maintain the focused state, lowers the amplification degree of the electrical signal and the power of the laser light according to a response state of the aberration correcting means, and turns ON the tracking servo with respect to the another one of the recording layers.

3. An information reproducing/recording device for reproducing or recording information with respect to a multi-layered optical recording medium, the device comprising:
an optical pickup for collecting laser light emitted from a laser light source at an objective lens, irradiating the laser light on the multi-layered optical recording medium including a plurality of recording layers, and receiving the laser light reflected by the multi-layered optical recording medium at light detecting means to convert the laser light to an electrical signal;
signal processing means for processing the electrical signal and detecting a focusing error signal and a tracking error signal;
servo means for executing focusing servo based on the focusing error signal, and executing tracking servo based on the tracking error signal; and
control means for controlling each section and executing focus jump of moving a focus position of the laser light from one of the recording layers to another one of the recording layers of the multi-layered optical recording medium; wherein
the control means raises the power of the laser light emitted from the laser light source to execute the focus jump while optimally maintaining the amplitude of the focusing error signal.

4. The information reproducing/recording device according to claim 3, further comprising:
aberration correcting means for correcting the aberration of the laser light irradiated on the multi-layered optical recording medium according to each recording layer; wherein
the control means changes a drive signal of the aberration correcting means from a drive signal corresponding to an aberration correcting value suited for one of the recording layers to a drive signal corresponding to an aberration correcting value suited for another one of the recording layers of the multi-layered optical recording medium, and then raises the power of the laser light to execute the focus jump while optimally maintaining the amplitude of the focusing error signal, and when detecting that the focus position of the laser light is focused on another one of the recording layers based on the focusing error signal, lowers the power of the laser light according to a response state of the aberration correcting means.

5. An information reproducing/recording device for reproducing or recording information with respect to a multi-layered optical recording medium, the device comprising:
an optical pickup for collecting laser light emitted from a laser light source at an objective lens, irradiating the laser light on the multi-layered optical recording medium including a plurality of recording layers, and receiving the laser light reflected by the multi-layered optical recording medium at light detecting means to convert the laser light to an electrical signal;
signal processing means for processing the electrical signal and detecting a focusing error signal and a tracking error signal;
servo means for executing focusing servo based on the focusing error signal, and executing tracking servo based on the tracking error signal; and
control means for controlling each section and executing focus jump of moving a focus position of the laser light from one of the recording layers to another one of the recording layers of the multi-layered optical recording medium; the device further comprising:
amplifying means for amplifying the electrical signal converted in the light detecting means and outputting the amplified signal to the signal processing means; wherein
the control means raises the amplification degree of the electrical signal of the amplifying means and the power of the laser light emitted from the laser light source to execute the focus jump while optimally maintaining the amplitude of the focusing error signal.

6. The information reproducing/recording device according to claim 5, further comprising:
aberration correcting means for correcting the aberration of the laser light irradiated on the multi-layered optical recording medium according to each recording layer; wherein
the control means changes a drive signal of the aberration correcting means from a drive signal corresponding to an aberration correcting value suited for one of the recording layers to a drive signal corresponding to an aberration correcting value suited for another one of the recording layers of the multi-layered optical recording medium, and then raises the amplification degree of the electrical signal and the power of the laser light to execute the focus jump while optimally maintaining the amplitude of the focusing error signal, and when detecting that the focus position of the laser light is focused on another one of the recording layers based on the focusing error signal, lowers the amplification degree of the electrical signal and the power of the laser light according to a response state of the aberration correcting means.

7. The information reproducing/recording device according to claim 5 or 6, wherein
the control means raises the power of the laser light after performing defocusing of slightly shifting the focus position of the laser light from one of the recording layers towards another one of the recording layers of the multi-layered optical recording medium.

8. The information reproducing/recording device according to claim 3 or 5, further comprising:
aberration correcting means for correcting the aberration of the laser light irradiated on the multi-layered optical recording medium according to each recording layer; wherein
the control means temporarily changes a drive signal of the aberration correcting means from a drive signal corresponding to an aberration correcting value suited for one of the recording layers to an excessive drive signal exceeding a drive signal corresponding to an aberration correcting value suited for another one of the recording layers of the multi-layered optical recording medium, and then changes the drive signal to the drive signal corresponding to the aberration correcting value suited for another one of the recording layers to execute the focus jump while reducing a response time of the aberration correcting means.

9. An information reproducing/recording device for reproducing or recording information with respect to a multi-layered optical recording medium, the device comprising:
an optical pickup for collecting laser light emitted from a laser light source at an objective lens, irradiating the laser light on the multi-layered optical recording medium including a plurality of recording layers, correcting aberration of the laser light by aberration correcting means according to each recording layer of the multi-layered optical recording medium, and receiving the laser light reflected by the multi-layered optical recording medium at light detecting means to convert the laser light to an electrical signal;
signal processing means for processing the electrical signal and detecting a focusing error signal and a tracking error signal;
servo means for executing focusing servo based on the focusing error signal, and executing tracking servo based on the tracking error signal; and
control means for controlling each section and executing focus jump of moving a focus position of the laser light from one of the recording layers to another one of the recording layers of the multi-layered optical recording medium; wherein
the control means temporarily changes a drive signal of the aberration correcting means from a drive signal corresponding to an aberration correcting value suited for one of the recording layers to an excessive drive signal exceeding a drive signal corresponding to an aberration correcting value suited for another one of the recording layers of the multi-layered optical recording medium, and then changes the drive signal to the drive signal corresponding to the aberration correcting value suited for another one of the recording layers to reduce a response time of the aberration correcting means, so that the focus jump is executed while optimally maintaining the amplitude of the focusing error signal.

10. The information reproducing/recording device according to claim 9, further comprising:
amplifying means for amplifying the electrical signal converted in the light detecting means and outputting the amplified signal to the signal processing means; wherein
the control means reduces the response time of the aberration correcting means and raises the amplification degree of the electrical signal of the amplifying means to execute the focus jump while optimally maintaining the amplitude of the focusing error signal.

11. An information reproducing/recording device for reproducing or recording information with respect to a multi-layered optical recording medium, the device comprising:
an optical pickup for collecting laser light emitted from a laser light source at an objective lens, irradiating the laser light on the multi-layered optical recording medium including a plurality of recording layers, and receiving the laser light reflected by the multi-layered optical recording medium at light detecting means to convert the laser light to an electrical signal;
signal processing means for processing the electrical signal and detecting a focusing error signal and a tracking error signal;
servo means for executing focusing servo based on the focusing error signal, and executing tracking servo based on the tracking error signal; and
control means for controlling each section and executing focus jump of moving a focus position of the laser light from one of the recording layers to another one of the recording layers of the multi-layered optical recording medium; the device further comprising:
amplifying means for amplifying the electrical signal converted in the light detecting means and outputting the amplified signal to the signal processing means; wherein
the control means raises the amplification degree of the electrical signal of the amplifying means to execute the focus jump while optimally maintaining the amplitude of the focusing error signal.
